(19) Europäisches Patentamt / European Patent Office / Office européen des brevets

(11) **EP 1 470 455 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(21) Anmeldenummer: **03734648.3**

(22) Anmeldetag: **16.01.2003**

(51) Int Cl.:
*G05B 13/04* (2006.01)    *B21B 37/76* (2006.01)

(86) Internationale Anmeldenummer:
**PCT/DE2003/000111**

(87) Internationale Veröffentlichungsnummer:
**WO 2003/065134 (07.08.2003 Gazette 2003/32)**

(54) **VERFAHREN ZUR REGELUNG EINES INDUSTRIELLEN PROZESSES**

METHOD FOR CONTROLLING AN INDUSTRIAL PROCESS

PROCEDE POUR METTRE AU POINT UN PROCESSUS INDUSTRIEL

(84) Benannte Vertragsstaaten:
**AT BE BG CH CY CZ DE DK EE ES FI FR GB GR HU IE IT LI LU MC NL PT SE SI SK TR**

(30) Priorität: **31.01.2002 DE 10203787**

(43) Veröffentlichungstag der Anmeldung:
**27.10.2004 Patentblatt 2004/44**

(73) Patentinhaber: **SIEMENS AKTIENGESELLSCHAFT**
**80333 München (DE)**

(72) Erfinder:
• **BROESE, Einar**
  **90562 Heroldsberg (DE)**
• **WEINZIERL, Klaus**
  **90480 Nürnberg (DE)**

(56) Entgegenhaltungen:
WO-A-98/18970          DE-A- 19 963 186
US-B1- 6 185 970       US-B1- 6 225 609

• **LEITHOLF M D ET AL: "MODEL REFERENCE CONTROL OF RUNOUT TABLE COOLING AT LTV" IRON AND STEEL ENGINEER, ASSOCIATION OF IRON AND STEEL ENGINEERS. PITTSBURGH, US, Bd. 66, Nr. 8, 1. August 1989 (1989-08-01), Seiten 31-35, XP000069320 ISSN: 0021-1559**

**Beschreibung**

Die Erfindung bezieht sich auf ein Verfahren zur Regelung eines industriellen Prozesses zur Fertigung oder Bearbeitung eines Produktes, insbesondere zur Regelung der Kühlstrecke eines Warmwalzwerkes.

Nach herkömmlichen Verfahren basiert die Steuerung und Regelung von industriellen Prozessen auf einem physikalischen Modell, das den realen industriellen Prozess abbilden soll. Bei der Steuerung der Kühlstrecke eines Warmwalzwerkes soll das physikalische Modell die Realität des gesamten Abkühlprozesses möglichst genau wiedergeben. Nun gibt es aber Effekte, die einer genauen Modellbildung nicht zugänglich sind, weil sie entweder stark anlagenspezifisch oder nicht mit vertretbarem Aufwand zu beschreiben sind. Als Beispiel ist hier der Einfluss der Stahloberflächenbeschaffenheit auf den Wärmeübergang zu nennen.

Um eine möglichst wirklichkeitsgetreue Modellbildung zu erreichen, wird daher das physikalische Modell um ein statistisches Modell erweitert, das vorhandene Korrelationen verschiedenster Einflussgrößen mit dem Modellfehler zur Modellkorrektur ausnutzt. Stellt man beispielsweise fest, dass das physikalische Modell bei einem bestimmten Material mit einer bestimmten Breite, Dicke und Geschwindigkeit einen typischen Fehler von 10 °C und eine Streuung von +/- 20 °C verursacht, so kann man den systematischen Anteil mit dem nachgeschalteten statistischen Modell korrigieren. Diese so genannte statistische Modellkorrektur kann auf unterschiedliche Weise erfolgen. Eine Methode ist es, in so genannten Vererbungstabellen Korrekturfaktoren in Schubladen von Materialklassen, Breitenklassen, Temperaturklassen, Dickenklassen usw. zu hinterlegen. Dieses Modell stößt allerdings an seine Grenzen, wenn eine größere Anzahl von Eingangsparametern abgedeckt werden soll. Hat man z.B. zehn Eingangsgrößen und möchte zu jeder Eingangsgröße zehn Teilintervalle bilden, so entstehen 10 Milliarden Schubladen, von denen im Lebenszyklus der Anlage nur ein geringer Teil gefüllt wird. Je geringer die Produktion ist, desto größer wird der Anteil der leeren Schubladen sein, das bedeutet, dass bei der Produktion eines Produktes mit neuen Parameterwerten die Wahrscheinlichkeit groß ist, dass noch keine gefüllte Schublade, d.h. noch kein Korrekturfaktor, dafür vorhanden ist und die statistische Modellierung damit ins Leere läuft.

Eine weitere Methode zur Bildung eines statistischen Modells sind neuronale Netze. Diese werden mit den Einflussgrößen als Input und dem gesuchten Korrekturfaktor als Output trainiert. Da das neuronale Netz den Korrekturfaktor als eine stetige Funktion der Einflussgrößen darstellt, kann nicht ausgeschlossen werden, dass auch bei Einbeziehung eines neuronalen Netzes bei bestimmten Materialien ein systematischer Fehler verbleibt. Ein weiterer Nachteil neuronaler Netze ist, dass sie erst umfangreich trainiert werden müssen, bis sie brauchbar funktionieren, d.h. es müssen erst eine Vielzahl von Bändern gekühlt werden bis das neuronale Netz einsatzfähig ist. Bis zum Abschluss des Trainings stehen keine Korrekturfaktoren zur Verfügung.

Aus der DE 199 63 186 A1 geht ein Verfahren zur Steuerung und Regelung der Kühlstrecke eines Warmwalzwerkes hervor, wobei die Steuerung auf einem physikalischen Modell der Kühlstrecke basiert und wobei ein Korrekturfaktor zur Korrektur eines Modellfehlers ermittelt wird.

Aus der WO 98/18970 A1 geht ein Verfahren zur Steuerung der Qualität von Walzprodukten aus Warmwalzprozessen hervor, bei dem eine statistische Anpassung eines Modells mithilfe von gespeicherten Daten älterer Walzprodukte durchgeführt wird.

Die US 6,185,970 B1 und die US 6,225,609 B1 betreffen weitere Verfahren zur modellbasierten Steuerung und Regelung der Kühlstrecke eines Walzwerkes, bei welchen Korrekturfaktoren zur Korrektur von Modellfehlern ermittelt werden.

Ferner ist aus Leitholf M. D. et al, "Model reference control of runout table cooling at LTV," Iron and Steel Engineer, Association of Iron and Steel Engineers, Pittsburgh, US, Bd. 66, Nr. 8, 1. August 1989, Seiten 31-35, ISSN: 0021-1559 ein Verfahren zur Steuerung und Regelung der Kühlstrecke eines Walzwerkes bekannt, bei welchem Korrekturfaktoren für ein physikalisches Modell ermittelt werden.

Es ist Aufgabe der Erfindung, ein einfaches statistisches Modell zur Ermittlung eines Korrekturfaktors für einen industriellen Prozess zu schaffen.

Diese Aufgabe wird durch ein Verfahren zur Steuerung und Regelung eines industriellen Prozesses zur Fertigung oder Bearbeitung eines Produktes gelöst, wobei die Steuerung auf einem physikalischen Modell des industriellen Prozesses basiert und wobei zur Optimierung der Steuerung mindestens ein Korrekturfaktor (K0) statistisch nach folgenden Verfahrensschritten ermittelt wird:

1. Zu gefertigten Produkten werden die Parameter des physikalischen Modells einschließlich mindestens eines Korrekturfaktors als Produktdatensätze gespeichert,
2. Bei jeder Fertigung oder Bearbeitung eines neuen Produktes werden die gespeicherten Produktdatensätze mit den Parametern des neuen Produkts verglichen und die dem neuen Produktdatensatz ähnlichen Produktdatensätze ermittelt.
3. Aus den Korrekturfaktoren der ähnlichen Produktdatensätze wird während der Fertigung des neuen Produkts mindestens ein neuer Korrekturfaktor für den neuen Datensatz ermittelt.

Das Verfahren kann auch für den Fall der Adoption mit mehreren Korrekturfaktoren eingesetzt werden. Es ergibt sich dann ein Korrekturfaktorvektor, wobei jede Komponente dieses Vektors, z.B. für einen Teilabschnitt der Kühlstrecke gültig ist.

Die Produktdatensätze werden vorteilhaft einfach chronologisch gespeichert. Dabei kann als Speicher ein sogenannter Ringpuffer verwendet werden. Der Vorteil dieses Speicherverfahrens besteht insbesondere darin, dass die alten Datensätze nicht weiter gespeichert werden. Wenn z.B. der Speicherplatz so groß ist, dass eine gesamte Jahresproduktion einer Bandstraße eines Warmwalzwerks gespeichert werden kann, dann kann davon ausgegangen werden, dass sich die fertigungstechnischen Parameter des industriellen Prozesses durch Alterung, Umbauten etc. so weit verändert haben, dass die alten Produktdatensätze keine zuverlässigen Korrekturfaktoren mehr beinhalten, so dass die Nicht-Berücksichtigung dieser alten Datensätze zumindest nicht zu schlechteren Ergebnissen führt.

Eine weitere vorteilhafte Ausbildung der Erfindung ist durch ein Verfahren gegeben, bei dem der neue Korrekturfaktor durch lineare Regression aus den Korrekturfaktoren der ähnlichen Produktdatensätze ermittelt wird. Der neue Korrekturfaktor kann mit dieser einfachen statistische Methode bei sehr kurzer Rechenzeit ermittelt werden.

Besonders vorteilhaft ist es, wenn die bisherigen Korrekturfaktoren zur Ermittlung des neuen Korrekturfaktors gewichtet werden. Die Gewichtung kann dabei nach der chronologische Reihenfolge der eingetragenen Produktdatensätze mit ihren jeweils zugehörigen Korrekturfaktoren erfolgen. Das heißt, dass jüngere Korrekturfaktoren stärker gewichtet werden als die zeitlich älteren. Damit lassen sich negative Einflüsse, beispielsweise durch Alterung der Fertigungs- oder Bearbeitungsstrecke - wie oben beschrieben - stark reduzieren.

Ein Ausführungsbeispiel der Erfindung wird anhand der Zeichnung näher beschrieben. Dabei zeigen:

FIG 1    eine schematische Darstellung einer Kühlstrecke eines Warmwalzwerkes einschließlich eines vereinfachten Blockschaltbildes des zugehörigen physikalischen Modells;

FIG 2    ein Diagramm der chemischen Zusammensetzung von Metallbändern;

FIG 3    ein Diagramm der Geschwindigkeit (v[m/s]) und Dicke (D[mm]) von Metallbändern;

FIG 4    ein Diagramm der Breite (B[mm]) von Metallbändern;

FIG 5    ein Diagramm der Temperatur (TFM[°C]) des Metallbandes am Fertigstraßenmessplatz;

FIG 6    ein Diagramm der Haspel-Soll-Temperatur (THS[°c]) ;

FIG 7    ein Blockschaltbild zur Bestimmung eines Korrekturfaktors (K);

FIG 8    ein Diagramm zur Gewichtung (G) der Korrekturfaktoren;

FIG 9    ein Diagramm zur Ermittlung des neuen Korrekturfaktors (K0).

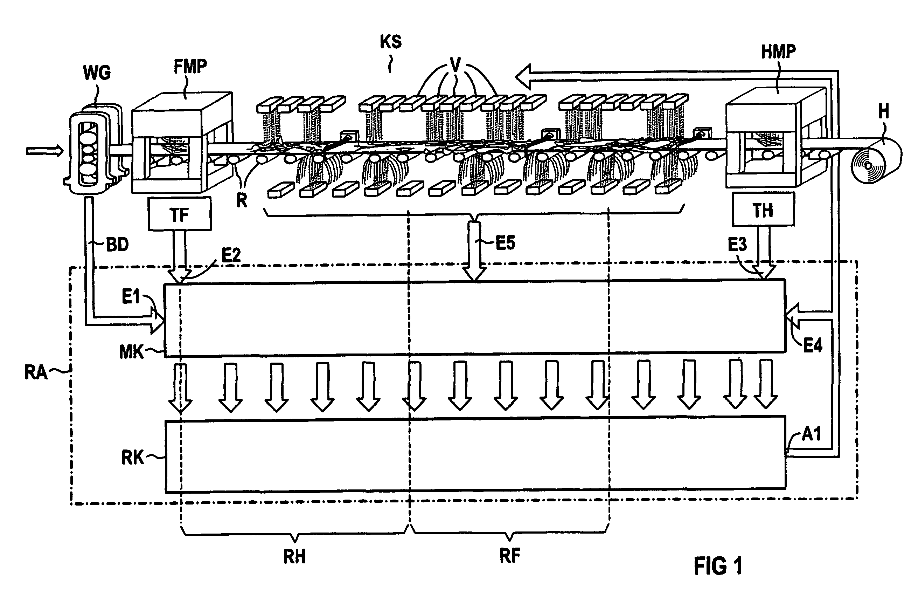

Die schematische Darstellung gemäß Figur 1 zeigt eine Kühlstrecke eines Warmwalzwerkes einschließlich eines vereinfachten Blockschaltbildes des zugehörigen physikalischen Modells. Das Metallband - in Pfeilrichtung von links kommend - durchläuft das letzte Walzgerüst WG und wird dort auf seine Enddicke gebracht. Anschließend durchläuft es den Fertigungsstra-ßenmessplatz FMP, in dem die Parameter wie Dicke D, Temperatur am Fertigungsstraßenmessplatz TF, Breite des Metallbandes B, etc. gemessen werden. Daraufhin durchläuft das Metallband die Kühlstrecke KS, in der es auf Rollen R geführt wird. In der Kühlstrecke sind oberhalb und unterhalb des Metallbandes Ventileinheiten V angeordnet, über deren Ventile Wasser auf das Metallband gespritzt wird. Nach der Abkühlung in der Kühlstrecke KS durchläuft das Band den Haspelmessplatz HMP und wird danach auf eine Haspel H aufgewickelt. In der Kühlstrecke KS sind in der Regel keine Temperaturen messbar.

Im Blockschaltbild der Regelstrecke RA ist die Kühlstrecke durch ein physikalisches Modell MK der Kühlstrecke nachgebildet. Dieses physikalische Modell MK der Kühlstrecke generiert die Regelparameter für den Regler RK der Kühlstrecke und berechnet für jede beliebige Stelle der Bandstrecke die Temperatur des Metallbandes. Dies ist durch die Pfeile symbolisiert, die sich zwischen dem Modell MK der Kühlstrecke und dem Regler RK der Kühlstrecke befinden. Der Regler RK der Kühlstrecke ist in einen Regler RH für die Hauptkühlzone sowie in einen Regler RF für die Feinkühlzone unterteilt.

Das physikalische Modell der Kühlstrecke erhält die Banddaten BD bzw. Bandparameter über den Eingang E1. Über den Eingang E2 erhält es zumindest die am Fertigungsstraßenmessplatz FMP gemessene Temperatur TF. Über den Eingang E3 wird dem Modell MK der Kühlstrecke die Haspeltemperatur TH übermittelt. Weitere Messwerte, z.B. Bandgeschwindigkeit und geschaltete Wassermenge, werden dem Modell über den Eingang E5 zugeführt.

Wie bereits beschrieben, berechnet das Modell MK der Kühlstrecke die Temperaturen an jeder beliebigen Stelle des Metallbandes, bezogen auf dessen Länge, so dass der Regler RK der Kühlzone diese Temperaturen als Istwerte für seine Regelung zur Verfügung hat. Der Regler berechnet nunmehr die Stellwerte für die Ventile V und übermittelt diese Werte über seinen Ausgang A1 an die Ventile V. Die Ventilzustände werden gleichzeitig über den Eingang E5 auf das Modell MK der Kühlstrecke gegeben.

Mit dieser Regelanordnung RA wäre es unter idealen Bedingungen und immer gleichen Zusammensetzungen des warmgewalzten und zu kühlenden Metallbandes möglich, einen vernünftigen Kühlprozess zu erreichen, so dass das Metallband vor der Aufwicklung auf die Haspel H die gewünschte Temperatur hat. Diese idealen Verhältnisse sind aber im realen Betrieb nicht gegeben. Dies führt dazu, dass die Haspeltemperatur TH von der gewünschten und über die Regelstrecke als Sollwert vorgegebenen Temperatur abweichen würde. Deswegen wird vom Modell der Kühlstrecke auch ein Korrekturfaktor K berechnet, über den die Abweichung zwischen idealen Temperaturverhältnissen und real gemessenen Temperaturverhältnissen minimiert werden soll. Dieser Korrekturfaktor K wird während der gesamten Zeit, in dem ein Metallband die Kühlstrecke durchläuft, kontinuierlich berechnet und angepasst. Ist das gesamte Metallband durchgelaufen und auf der Haspel H aufgewickelt, so steht der optimale Korrekturfaktor K für dieses Metallband fest.

Der Korrekturfaktor ist damit ganz individuell dem Produktdatensatz PDk eines Bandes zugeordnet. Diese Produktdatensätze PD1 bis PDn von bereits produzierten Metallbändern werden in Tabellenform in einem Ringpuffer abgelegt. Die nachfolgende Tabelle zeigt beispielhaft die Produktdatensätze PD1 bis PDn in Tabellenform.

Tabelle 1

| PD1 | D1 | B1 | V1 | TH1 | TF1 | C1 | Cu1 | Si1 | K1 |
|-----|----|----|----|-----|-----|----|-----|-----|----|
| PD2 | D2 | B2 | V2 | TH2 | TF2 | C2 | Cu2 | Si2 | K2 |
| PD3 | D3 | B3 | V3 | TH3 | TF3 | C3 | Cu3 | Si3 | K3 |
| . | | | | | | | | | |
| . | | | | | | | | | |
| . | | | | | | | | | |
| PDn | Dn | Bn | Vn | THn | TFn | Cn | Cun | Sin | Kn |

Als Parameter werden beispielsweise zum Produktdatensatz PD1 die Dicke D1, Breite B1, Geschwindigkeit V1, Haspeltemperatur TH1, die Temperatur des Fertigungsstraßenmessplatzes TF1 sowie die chemischen Bestandteile abgelegt. Zu den chemischen Bestandteilen gehören beispielsweise der Kohlenstoffgehalt C1, der Kupfergehalt Cu1, der Siliziumgehalt Si1, usw. (in der Tabelle sind nicht alle Bestandteile aufgeführt).

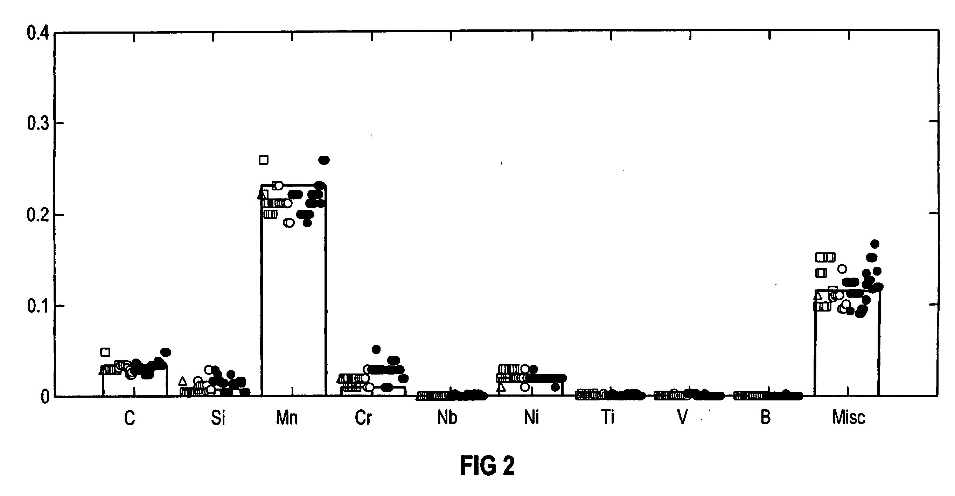

Die Balken des in Figur 2 gezeigten Diagramms zeigen die chemische Zusammensetzung eines neu zu walzenden Metallbandes. Die Legierungsanteile der chemischen Elemente sind im einzelnen: Kohlenstoff C=0,02, Silizium Si=0,01, Mangan Mn=0,22, Chrom Cr=0,01, Niob Nb=0, Nickel Ni=0,02, Titan Ti=0, Vanadium V=0, Bor B=0 und die Summe der restlichen Legierungsbestandteile Misc=0,11.

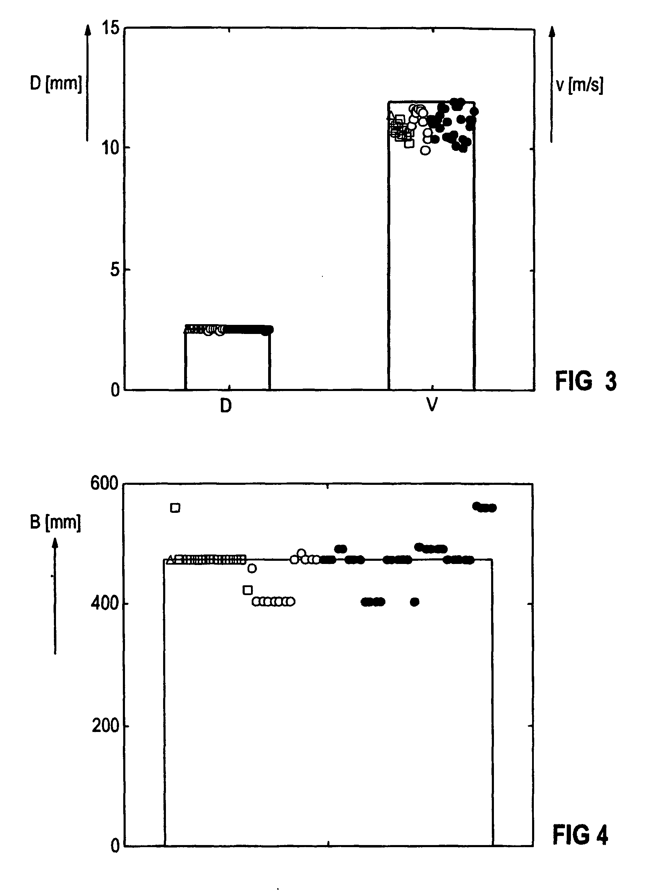

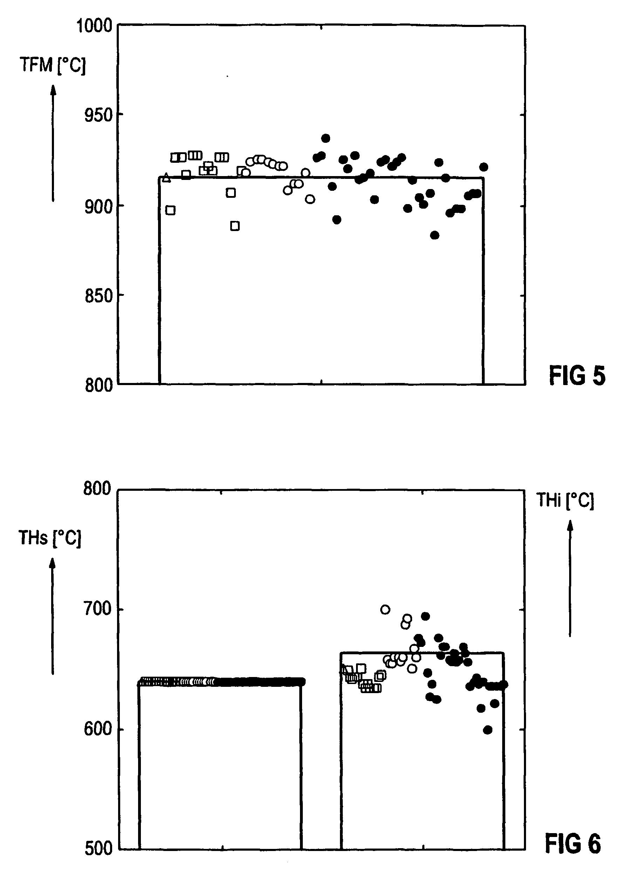

Im Balkendiagramm gemäß Figur 3 sind die gewünschte Dicke D in Millimeter sowie die Geschwindigkeit des Walzvorgangs V in Meter/Sekunde dargestellt; das Balkendiagramm von Figur 4 zeigt die Breite B in Millimeter und in den Diagrammen der Figuren 5 und 6 sind schließlich die gewünschte Temperatur am Fertigungsstraßenmessplatz TFM sowie die Haspel-Solltemperatur THs und die Haspel-Isttemperatur TH dargestellt.

Das neue Band soll nun mit den in den Balkendiagrammen der Figuren 2 bis 6 dargestellten Parametern gefertigt werden. (Auf die in den Balkendiagrammen der Figuren 2 bis 6 eingezeichneten geometrischen Figuren - Kreise, Punkte, Quadrate und Dreiecke - wird weiter unten noch eingegangen.)

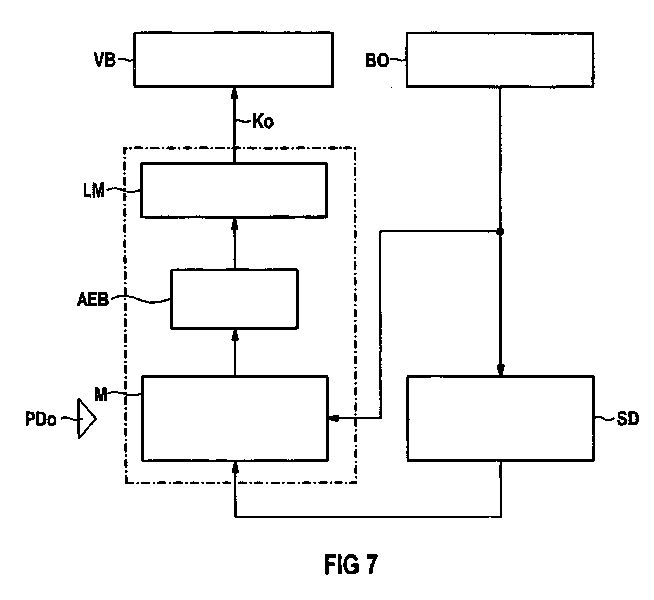

Für das neu zu walzende Metallband muss nun ein Korrekturfaktor K bestimmt werden. Dies sei im Folgenden anhand der Figur 7 näher erläutert.

Figur 7 zeigt ein Blockschaltbild einer Einrichtung zur Bestimmung eines Korrekturfaktors K für ein neues Band. Es besteht aus einem Beobachter BO, dessen Ausgang mit einem Bandspeicher M und einem Sicherungsspeicher SD verbunden ist. Der Sicherungsspeicher SD dient der Sicherung der Datensätze für den Fall, dass die Daten im Bandspeicher M z.B. durch Rechnerausfall verloren gehen. Über den Ausgang des Sicherungsspeichers SD kann der Bandspeicher M beim Programmstart geladen werden.

Der Bandspeicher M enthält die Produktdatensätze PD1 bis PDn aller bereits gefertigten Bänder oder zumindest einer großen Anzahl aller bereits gefertigten Bänder. Zum Beispiel kann der Bandspeicher M ein Ringpuffer sein, der die Daten von 100 000 Bändern enthält. Diese Bänder sind in Walzreihenfolge gespeichert, d.h. sie sind chronologisch abgelegt. Der dafür notwendige Speicherbedarf beträgt ca. 20 Megabyte.

Anhand der Primärdaten des neu zu fertigenden Bandes, für die ein Datensatz PD0 gemäß der folgenden Tabelle 2 existiert

Tabelle 2

| PD0 | D0 | B0 | V0 | TH0 | TF0 | C0 | Cu0 | Si0 | K0 |
|-----|-----|-----|-----|-----|-----|-----|-----|-----|-----|

(wobei der Wert für K0 noch nicht bekannt ist, da das Band noch nicht gekühlt wurde) werden nunmehr aus den im Bandspeicher M befindlichen Produktdatensätzen (siehe Tabelle 1) PD1 bis PDn ähnliche Datensätze, z.B. nach folgender Regel ermittelt:

$$a^2 := c1(D-D0)^2 + c2 \cdot (B-B0)^2 + c3(TH-TH0)^2 + \ldots$$

Dabei bezeichnen c1, c2, c3,..., positive reellwertige Konstanten.

Ist $a^2 < 1$, dann handelt es sich um einen ähnlichen Datensatz; sofern $a^2$ nicht $< 1$ ist, ist der Datensatz nicht ähnlich und wird zur weiteren Berechnung des Korrekturfaktors nicht herangezogen.

Nach dieser Berechnungsvorschrift ergeben sich beispielsweise bei 20 Parametern 40 Multiplikationen und 20 Additionen, wobei leicht ersichtlich ist, dass der Vergleich mit einem der Produktdatensätze PD1 bis PDn bereits dann abgebrochen werden kann, wenn ein Produkt $> 1$ ist, so dass hier beträchtlich Rechenzeit eingespart werden kann. Die Konstanten C1, C2, C3, usw., dienen der Normierung der einzelnen Summanden.

Auf diese Weise werden alle den Primärdaten PD0 des neu zu fertigenden Bandes ähnlichen Produktdatensätze PD1 bis PDn ermittelt und in einem Speicher AEB (Figur 7) abgelegt. Die Werte dieser Daten sind in Form von Kreisen, Punkten, Quadraten und Dreiecken in den Balkendiagrammen der Figuren 2 bis 6 wiedergegeben. Dabei beschreiben die unterschiedlichen geometrischen Figuren das unterschiedliche Alter der ermittelten Produktdatensätze. Wie zu sehen ist, sind die ermittelten Produktdatensätze tatsächlich ähnlich dem neuen Produktdatensatz PDO, da sie in Balkenhöhe der Diagramme liegen.

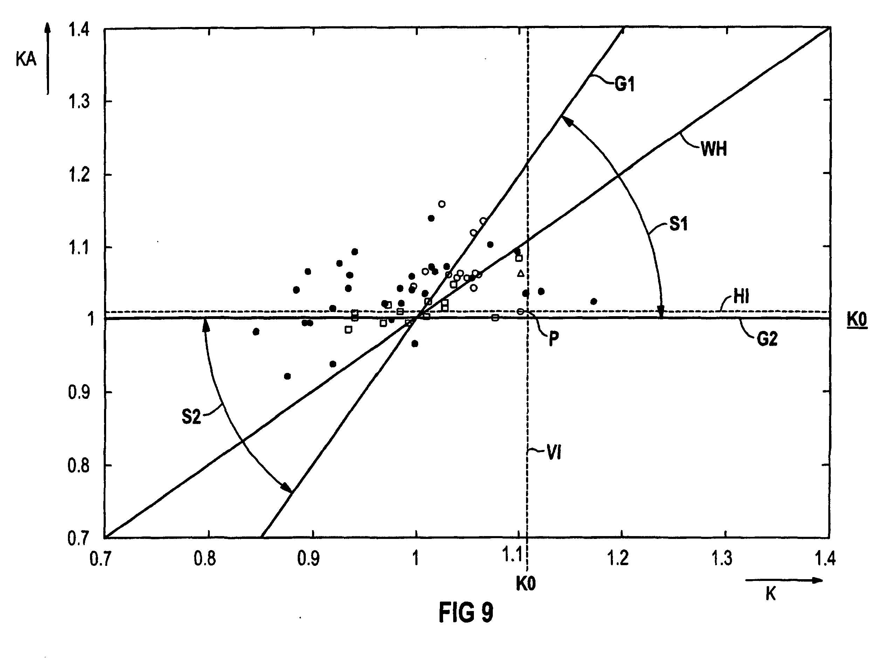

Gemäß Figur 7 wird nun aus den Produktdatensätzen PD1 bis PDn der ähnlichen Bänder zunächst ein lokales Modell LM gebildet. Dies kann beispielsweise durch Anwendung der bekannten Technik der linearen Regression erfolgen. Sodann wird ein Korrekturfaktor K0 für das neu zu kühlende Metallband durch Einsetzen des Primärdatensatzes PD0 in das lineare Modell LM gebildet. Dies wird anhand von Figur 9 erläutert. Zunächst sei aber noch ein vorteilhafter Zwischenschritt beschrieben.

Vor der endgültigen Berechnung des neuen Korrekturfaktors K0 ist es sinnvoll, die gefundenen ähnlichen Bänder, d.h. die gefundenen ähnlichen Produktdatensätze PD1 bis PDn zu gewichten.

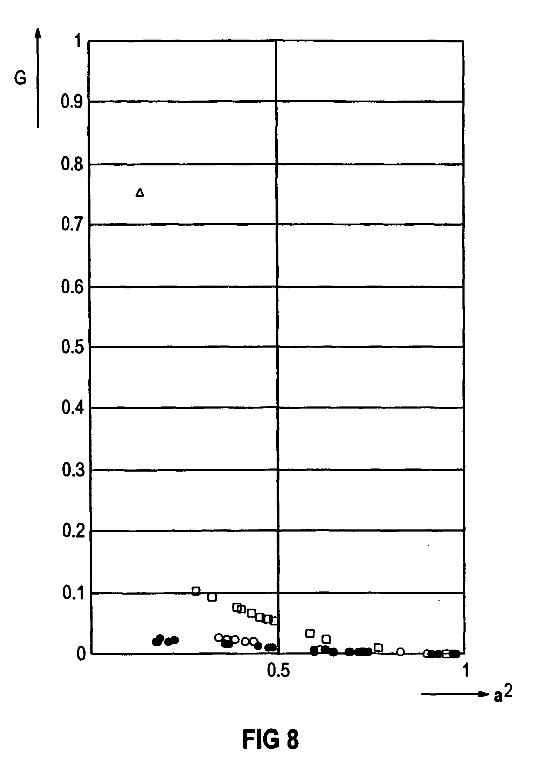

In der Darstellung gemäß Figur 8 ist diese Gewichtung gezeigt. Auf der horizontalen Achse ist dabei der Abstand der Bänder $a^2$, der nach der oben bereits gezeigten Berechnungsvorschrift gefunden wurde, angegeben. Bänder mit $a^2 = 1$ werden hier gerade nicht mehr erfasst. Bänder, die einen großen Abstand bis maximal ungefähr $= 1$ haben, werden sehr gering gewichtet. Im hier gezeigten Diagramm haben diese Bänder eine Gewichtung 0 oder nahe 0. Wie zu sehen ist, nimmt die Gewichtung mit abnehmenden Abstand $a^2$ zu.

Auch im Diagramm gemäß Figur 8 ist das Alter der Bänder (Alter entsprechend dem Produktionsdatum) durch unterschiedliche geometrische Symbole gekennzeichnet, und zwar in der Reihenfolge von Jung nach Alt: Δ, □, Kreis, Punkt. Bei dem einzigen Band mit dem Dreieckensymbol handelt es sich somit um das jüngste Band, das, wie zu sehen ist, auch am höchsten, nämlich mit 0,75 gewichtet ist.

Im Diagramm gemäß Figur 9 ist der jeweils nachberechnete Korrekturfaktor K auf der horizontalen Achse dargestellt und der im lokalen Modell mittels linearer Regression approximierte Korrekturfaktor KA auf der senkrechten Achse.

Würde das lineare Modell LM die in den Datensätzen der ähnlichen Bänder enthaltenen nachberechneten Korrekturfaktoren ideal nachbilden, so würde der mittels des linearen Modells berechnete Korrekturfaktor KA gleich sein mit dem nachberechneten Korrekturfaktor K und somit würden die Korrekturfaktoren auf der Winkelhalbierenden liegen. Da dies nicht der Fall ist, streuen, wie in Figur 9 gezeigt, die Werte der Korrekturfaktoren. Hieran kann man erkennen, wie genau das lineare Modell LM die ähnlichen Produktdatensätze PD0 bis PDn beschreibt. In das Diagramm gemäß Figur 9 ist weiter eine Gerade G1 eingezeichnet, die die Steigung 2 hat. Zwischen dieser Geraden G1 und einer horizontalen Linie G2 wird ein Sektor S1 aufgespannt.

Jeder Punkt, der innerhalb des Sektors S1 liegt, wird durch das lineare Modell LM besser abgebildet als wenn man gleich auf die Adaption verzichtet hätte, d.h., mit dem Korrekturfaktor K = 1 approximieren würde. Umgekehrt verhält es sich bei allen Punkten, die nicht im Sektor S1 liegen und auch nicht im gegenüberliegenden Sektor S2 (für den sinngemäß dasselbe zutrifft wie für den Sektor S1). Man kann der genannten Darstellung so eine Abschätzung entnehmen, wie gut die Adaption nun für das zu kühlende Band wird. Für dieses liegt noch kein nachberechneter Korrekturfaktor vor, da es noch nicht gekühlt wurde. Einsetzen des dazugehörigen Produktdatensatzes PD0 in das lineare Modell LM liefert einen Schätzwert $K0$ für den Korrekturfaktor K0, der dann für die spätere Kühlung angewendet wird. Das Ergebnis ist als Horizontale H1 gestrichelt in Figur 9 eingezeichnet. Nach Kühlung des Bandes ist ein nachberechneter Korrekturfaktor K0 bekannt. Figur 9 zeigt als Vertikale V1 das entsprechende Ergebnis. Der Schnittpunkt P zwischen der Horizontalen H1 und der Vertikalen V1 zeigt nun im nachhinein die Qualität der Adaption für das gekühlte Band. Liegt der Punkt P innerhalb S1 oder S2, war die Adaption erfolgreich. Liegt er außerhalb, wäre Kühlen ohne Adaption besser gewesen.

Nachdem nun der Schätzwert $K0$ gefunden ist, wird dieser zusammen mit den anderen Produktdaten PD0 in die Vorausberechnung VR (Figur 7) eingegeben und das Band wird mit diesen Parameterwerten und dem gefundenen Schätzwert $K0$ gekühlt, wobei auch hier während des Kühlvorganges eine Feinabstimmung des Korrekturfaktors $K0$ über den Beobachter B erfolgt. Dadurch entsteht letztlich der abgespeicherte Korrekturfaktor K0.

Mit heutigen Datenverarbeitungsanlagen beträgt die Rechenzeit zur Suche von ähnlichen Bändern aus einem Datensatz mit 100.000 Bändern ca. 1/10tel Sekunde, die Rechenzeit zur Ermittlung des Korrekturfaktors $K0$ aus den ähnlichen Bändern mittels linearer Regression beträgt etwa 0,02 Sekunden, so dass der neue Korrekturfaktor $K0$ bereits sicher berechnet ist, wenn das Band gerade das letzte Walzgerüst (WG in Figur 1) verlassen hat.

**Patentansprüche**

1. Verfahren zur Steuerung und Regelung eines industriellen Prozesses zur Fertigung oder Bearbeitung eines Produktes, wobei die Steuerung auf einem physikalischen Modell des industriellen Prozesses basiert und wobei mindestens ein Korrekturfaktor (K0) für das physikalische Modell ermittelt wird, **gekennzeichnet durch** die folgenden Verfahrensschritte:

    1.1 Zu gefertigten Produkten werden Parameter (D, B, TH, TFM, C, Cu, Si, ...) einschließlich mindestens eines Korrekturfaktors (K1 - Kn) als Produktdatensätze (PD1 - PDn) gespeichert;
    1.2 bei jeder Fertigung oder Bearbeitung eines neuen Produktes werden die gespeicherten Produktdatensätze (PD1 - PDn) mit den Parametern (D0, B0, TH0, TFM0, C0, Cu0, Si0, ...) des neuen Produkts verglichen und ähnliche Produktdatensätze mit einem Abstand

$$a^2 := c1(D-D0)^2 + c2(B-B0)^2 + c3(TH-TH0)^2 + \ ...$$

    kleiner als eins ermittelt, wobei c1, c2, c3,... Normierungskonstanten und D, D0, B, B0, TH, TH0, ... Parameter der gefertigten Produkte bzw. des neuen Produktes bezeichnen;
    1.3 aus den Korrekturfaktoren (K1 - Kn) der ähnlichen Produktdatensätze (PD1 - PDn) wird während der Fertigung des neuen Produkts mindestens ein neuer Korrekturfaktor (K0) für den neuen Produktdatensatz (PD0) ermittelt.

2. Verfahren nach Anspruch 1, **dadurch gekennzeichnet, dass** zur Ermittlung des Korrekturfaktors (K0) zuvor aus den ähnlichen Produktdatensätzen ein lokales Modell (LM) gebildet wird, in das der neue Produktdatensatz (PD0) eingesetzt wird.

3. Verfahren nach Anspruch 2, **dadurch gekennzeichnet, dass** das lokale Modell (LM) linear ist.

4. Verfahren nach einem der vorstehenden Ansprüche, **dadurch gekennzeichnet, dass** die Produktdatensätze chronologisch - beispielsweise in einem Ringspeicher - gespeichert werden.

5. Verfahren nach einem der vorstehenden Ansprüche, **dadurch gekennzeichnet, dass** die Korrekturfaktoren (K1 - Kn) zur Ermittlung des neuen Korrekturfaktors (K0) gewichtet werden.

6. Verfahren nach Anspruch 5, **dadurch gekennzeichnet, dass** die chronologisch jüngeren Korrekturfaktoren (K1 - Kn) stärker gewichtet werden als die chronologisch älteren.

7. Verfahren nach Anspruch 5 oder 6, **dadurch gekennzeichnet, dass** die Gewichtung der Korrekturfaktoren (K1 - Kn) mit abnehmendem Abstand $a^2$ zunimmt.

**8.** Verfahren nach einem der vorstehenden Ansprüche, **dadurch gekennzeichnet, dass** der industrielle Prozess zusätzlich noch geregelt wird.

**9.** Verfahren nach einem der vorstehenden Ansprüche, **dadurch gekennzeichnet, dass** der industrielle Prozess eine Kühlstrecke eines Warmwalzwerkes ist.

**Claims**

**1.** Method for open-loop and closed-loop controlling of an industrial process for manufacturing or processing a product, where control is preferably based on a physical model of the industrial process and where at least one correction factor (K0) is determined for the physical model, **characterised by** the following procedural steps:

1.1 For finished products parameters (D, B, TH, TFM, C, Cu, Si, ...) including at least one correction factor (K1 - Kn) are stored as product data records (PD1 - PDn);
1.2 For each manufacturing or processing of a new product the stored product data records (PD1 - PDn) are compared with the parameters (D0, B0, TH0, TFM0, C0, Cu0, Si0, ...) of the new product and similar product data records with a distance

$$a^2 := c1(D-D0)^2 + c2(B-B0)^2 + c3(TH-TH0)^2 + \ldots$$

less than one are determined, where c1, c2, c3, ... designate standardisation constants and D, D0, B, B0, TH, TH0, ... designate parameters of the manufactured products or of the new product;
1.3. From the correction factors (K1 - Kn) of the similar product data records (PD1 - PDn), during the manufacturing of the new product at least one new correction factor (K0) is determined for the new product data record (PD0).

**2.** Method in accordance with claim 1, **characterised in that** to determine the correction factor (K0) a local model (LM) is formed beforehand from the similar product data records, into which model the new product data record (PD0) can be inserted.

**3.** Method in accordance with claim 2, **characterised in that** the local model (LM) is linear.

**4.** Method in accordance with one of the preceding claims, **characterised in that** the product data records are stored chronologically - for example in a ring buffer.

**5.** Method in accordance with one of the preceding claims, **characterised in that** the correction factors (K1 - Kn) are weighted to determine the new correction factor (K0).

**6.** Method in accordance with claim 5, **characterised in that** the chronologically more recent correction factors (K1 - Kn) are weighted more heavily than the chronologically older factors.

**7.** Method in accordance with claim 5 or 6, **characterised in that** the weighting of the correction factors (K1 - Kn) increases as the distance $a^2$ decreases.

**8.** Method in accordance with one of the preceding claims, **characterised in that** the industrial process is subject to additional control.

**9.** Method in accordance with one of the preceding claims, **characterised in that** the industrial process is a cooling line of a hot-rolling mill.

**Revendications**

**1.** Procédé de commande et de régulation d'un processus industriel de fabrication ou de traitement d'un produit, la commande étant fondée sur un modèle physique du processus industriel et au moins un facteur (K0) de correction du modèle physique étant déterminé, **caractérisé par** les stades de procédé suivants :

1.1 pour des produits finis, on mémorise des paramètres (D, B, TH, TFM, C, Cu, Si, ...), y compris au moins un facteur (K1 à Kn) de correction, sous la forme d'un jeu (PD1 à PDn) de données de produit ;

1.2 pour chaque fabrication ou traitement d'un nouveau produit, on compare les jeux (PD1 à PDn) de données de produits mémorisés aux paramètres (D0, B0, TH0, TFM0, C0, Cu0, Si0, ...) du nouveau produit et on détermine des jeux de données de produit analogues ayant une distance

$$a^2: = c1(D-D0)^2 + c2(B-B0)^2 + c3(TH-TH0)^2 + \ldots$$

plus petite que 1, c1, c2, c3, ... désignant des constantes de normation et D, D0, B, B0 TH, TH0 des paramètres des produits finis ou du produit nouveau ;

1.3 à partir des facteurs (K1 à Kn) de correction des jeux (PD1 à PDn) de données de produits analogues, on détermine pendant la fabrication du produit nouveau au moins un facteur (K0) de correction pour le nouveau jeu (PD0) de données de produit.

2. Procédé suivant la revendication 1, **caractérisé en ce que**, pour déterminer le facteur (K0) de correction, on forme d'abord à partir des jeux de données de produits analogues un modèle (LM) local dans lequel on insère le nouveau jeu (PD0) de données de produit.

3. Procédé suivant la revendication 2, **caractérisé en ce que** le modèle (LM) local est linéaire.

4. Procédé suivant l'une des revendications précédentes, **caractérisé en ce que** l'on mémorise les jeux de données de produits chronologiquement, par exemple dans une mémoire annulaire.

5. Procédé suivant l'une des revendications précédentes, **caractérisé en ce que** l'on pondère les facteurs (K1 à Kn) de correction pour déterminer le nouveau facteur (K0) de correction.

6. Procédé suivant la revendication 5, **caractérisé en ce que** l'on donne une pondération plus grande aux facteurs K1 à Kn) de correction chronologiquement les plus récents qu'à ceux chronologiquement les plus anciens.

7. Procédé suivant la revendication 5 ou 6, **caractérisé en ce que** l'on augmente la pondération des facteurs (K1 à Kn) de correction au fur et à mesure que la distance $a^2$ diminue.

8. Procédé suivant l'une des revendications précédentes, **caractérisé en ce que** l'on régule encore supplémentairement le processus industriel.

9. Procédé suivant l'une des revendications précédentes, **caractérisé en ce que** le processus industriel est une section de refroidissement d'un laminoir à chaud.

FIG 1

EP 1 470 455 B1

FIG 2

FIG 3

FIG 4

FIG 5

FIG 6

VB

BO

Ko

LM

AEB

M

PDo

SD

FIG 7

FIG 8

**FIG 9**

EP 1 470 455 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19963186 A1
- WO 9818970 A1
- US 6185970 B1
- US 6225609 B1

**In der Beschreibung aufgeführte Nicht-Patentliteratur**

- **LEITHOLF M. D. et al.** Model reference control of runout table cooling at LTV. *Iron and Steel Engineer, Association of Iron and Steel Engineers,* 01. August 1989, vol. 66 (8), 31-35